(19) Europäisches Patentamt
European Patent Office
Office européen des brevets

(11) EP 4 389 773 A1

(12) **EUROPEAN PATENT APPLICATION**
published in accordance with Art. 153(4) EPC

(43) Date of publication:
**26.06.2024 Bulletin 2024/26**

(21) Application number: **21954126.5**

(22) Date of filing: **16.08.2021**

(51) International Patent Classification (IPC):
***C08B 3/14*** *(2006.01)* ***C02F 1/28*** *(2023.01)*
***C08F 8/30*** *(2006.01)*

(52) Cooperative Patent Classification (CPC):
**C02F 1/28; C08B 3/14; C08F 8/30**

(86) International application number:
**PCT/JP2021/029911**

(87) International publication number:
**WO 2023/021551 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **National University Corporation Kanazawa University**
  **Ishikawa 920-1192 (JP)**
- **Daicel Corporation**
  **Osaka 530-0011 (JP)**

(72) Inventors:
- **MAEDA, Katsuhiro**
  **Kanazawa-shi, Ishikawa 920-1192 (JP)**
- **TANIGUCHI, Tsuyoshi**
  **Kanazawa-shi, Ishikawa 920-1192 (JP)**
- **NISHIMURA, Tatsuya**
  **Kanazawa-shi, Ishikawa 920-1192 (JP)**
- **OKAMOTO, Hiroya**
  **Kanazawa-shi, Ishikawa 920-1192 (JP)**
- **HASEGAWA, Hiroshi**
  **Kanazawa-shi, Ishikawa 920-1192 (JP)**
- **MASHIO, Asami**
  **Kanazawa-shi, Ishikawa 920-1192 (JP)**
- **WONG, Kuo Hong**
  **Kanazawa-shi, Ishikawa 920-1192 (JP)**
- **TAKEKUMA, Motohiro**
  **Kanazawa-shi, Ishikawa 920-1192 (JP)**
- **ENDO, Masaru**
  **Tokyo 108-8230 (JP)**
- **ARAI, Takashi**
  **Tokyo 108-8230 (JP)**

(74) Representative: **Hoffmann Eitle**
**Patent- und Rechtsanwälte PartmbB**
**Arabellastraße 30**
**81925 München (DE)**

(54) **CELLULOSE DERIVATIVE, AND BORON ADSORBENT CONTAINING SAID CELLULOSE DERIVATIVE**

(57) There is provided a cellulose derivative that has a high amount of a chelate adsorption group introduced, has high hydrophilicity, and is capable of efficiently recovering boron.

The cellulose derivative of the present disclosure has a repeating unit represented by the following formula (I-1). In the following formula (I-1), $R^a$ is the same as or different from each other, and is a hydroxyl group or a group represented by the following formula (a). In the following formula (a), $R^1$ represents a hydrogen atom or a methyl group. $R^2$ represents a hydrogen atom or a hydrocarbon group optionally having a hydroxyl group. $R^3$ represents a hydrogen atom or a hydrocarbon group. Note that at least one of all $R^a$ contained in the cellulose derivative is the group represented by the following formula (a).



Processed by Luminess, 75001 PARIS (FR)

**(Cont. next page)**

[Formula 1]

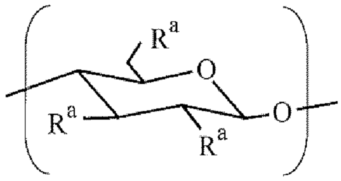

(I-1)

[Formula 2]

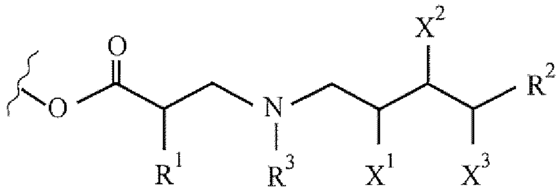

(a)

## Description

### Technical Field

The present disclosure relates to a novel cellulose derivative and a method for producing the cellulose derivative, a boron adsorbent comprising the cellulose derivative, and a method for recovering boron using the cellulose derivative.

### Background Art

Boron is often used as a raw material for heat insulating materials and glass fibers. In addition, it is also used in the production of special glass such as liquid crystal displays and the like. Therefore, boron is widely present in rivers and seawater via industrial wastewater.

Boron is an essential trace element for plants, but is known to inhibit plant growth when contained in a large amount in agricultural water. Thus, it is demanded to remove boron contained in water.

Patent Literature 1 describes an aromatic crosslinked polymer that has hydrophilicity and is capable of recovering boron dissolved and present in water by chelate adsorption. The aromatic crosslinked polymer is obtained by introducing a chloromethyl group into a polystyrene-divinylbenzene crosslinked copolymer to produce a chloromethylated polymer, reacting the produced polymer with N-methylglucamine to introduce a chelate adsorption group for boron, and further reacting with a low molecular alkylamine to make it hydrophilic.

### Citation List

### Patent Literature

Patent Literature 1: Japanese Patent Laid-Open No. 2005-239961

### Summary of Invention

### Technical Problem

However, the aromatic crosslinked polymer still has low hydrophilicity, and therefore, the recovery of boron takes too long. In Examples of Patent Literature 1, the aromatic crosslinked polymer is immersed in a boron solution for 72 hours to recover boron in the solution. Although the hydrophilicity can be improved by increasing the introduction rate of the hydrophilic group, the amount of the chelate adsorption group introduced declines along with it, making it difficult to obtain high hydrophilicity while maintaining a high amount of the chelate adsorption group introduced.

Accordingly, an object of the present invention is to provide a cellulose derivative that has a high amount of a chelate adsorption group introduced, has high hydrophilicity, and is capable of efficiently recovering boron.

Another object of the present disclosure is to provide a method for producing the cellulose derivative.

Another object of the present disclosure is to provide a boron adsorbent that is capable of efficiently recovering boron.

Another object of the present disclosure is to provide a method for recovering boron using the cellulose derivative.

### Solution to Problem

As a result of diligent studies to solve the above problem, the present inventors have found that, since cellulose has high hydrophilicity, if a chelate adsorption group is introduced into cellulose, a cellulose derivative that possess high hydrophilicity and a high amount of the chelate adsorption group introduced and is excellent in boron adsorption power can be obtained. The present disclosure has been completed based on this finding.

That is, the present disclosure provides a cellulose derivative having a repeating unit represented by the following formula (I-1).

[Formula 1]

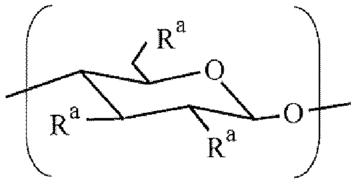

(I-1)

[In the formula, $R^a$ is the same as or different from each other, and is a hydroxyl group or a group represented by the following formula (a). Note that at least one of all $R^a$ contained in the cellulose derivative is the group represented by the following formula (a).]

[Formula 2]

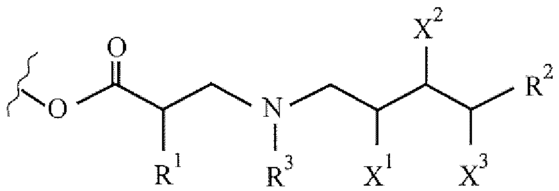

(a)

(In the formula, $R^1$ represents a hydrogen atom or a methyl group. $R^2$ represents a hydrogen atom or a hydrocarbon group optionally having a hydroxyl group. $R^3$ represents a hydrogen atom or a hydrocarbon group. $X^1$ to $X^3$ are the same as or different from each other, and each represent a group that forms a complex with a hard acid in the HSAB theory.)

The present disclosure also provides the cellulose derivative, in which the total average degree of substitution with the group represented by the formula (a) is 0.1 to 3.0.

The present disclosure also provides the cellulose derivative, in which the group represented by the formula (a) is introduced in an amount of 1.5 mol/kg or more.

The present disclosure also provides a boron adsorbent comprising the cellulose derivative.

The present disclosure also provides a method for recovering boron, in which boron dissolved in an aqueous solution is adsorbed by the cellulose derivative and recovered.

The present disclosure also provides a method for producing a cellulose derivative, in which the cellulose derivative is produced through the following steps.

[1] Reacting a cellulose with a compound represented by the following formula (2)

[Formula 3]

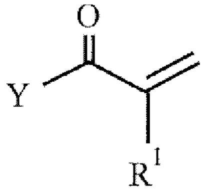

(2)

(In the formula, $R^1$ represents a hydrogen atom or a methyl group. Y represents a hydroxyl group or a halogen atom.) to produce a cellulose derivative having a repeating unit represented by the following formula (II).

[Formula 4]

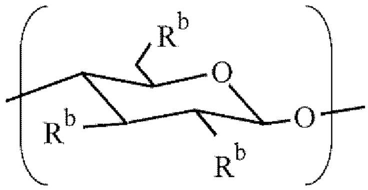

(II)

[$R^b$ in the formula is the same as or different from each other, and is a hydroxyl group or a group represented by the following formula (b).

[Formula 5]

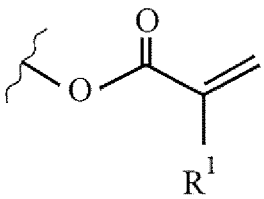

(b)

(In the formula, $R^1$ is the same as described above.)
Note that at least one of all $R^b$ contained in the cellulose derivative is the group represented by the formula (b).]
[2] Reacting the cellulose derivative having the repeating unit represented by the formula (II) with a compound represented by the following formula (3).

[Formula 6]

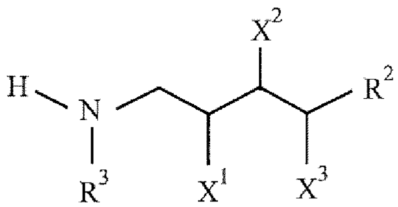

(3)

(In the formula, $R^2$ represents a hydrogen atom or a hydrocarbon group optionally having a hydroxyl group, and $R^3$ represents a hydrogen atom or a hydrocarbon group. $X^1$ to $X^3$ are the same as or different from each other, and each represent a group that forms a complex with a hard acid in the HSAB theory.)

Advantageous Effects of Invention

The cellulose derivative of the present disclosure has a side chain represented by the formula (a). The side chain has the property of easily forming a chelate with a hard acid in the HSAB theory. Therefore, by using the cellulose derivative, boron, which is regarded as hard acids in the HSAB theory, can be selectively and efficiently adsorbed and recovered.

In addition, since the cellulose derivative is excellent in hydrophilicity, when an aqueous solution containing boron is brought into contact with the cellulose derivative, the aqueous solution containing boron easily and quickly penetrates into the inside of the cellulose derivative, and boron in the aqueous solution is adsorbed and fixed on the side chain represented by the formula (a). Thus, by using the cellulose derivative, boron dissolved in the aqueous solution can be adsorbed and recovered in a short time.

Accordingly, the cellulose derivative can be suitably used for applications in which boron contained in wastewater and the like is selectively and quickly adsorbed and recovered.

Furthermore, the cellulose derivative does not cause exhaust problems when burned, and the volume reduction by burning the cellulose derivative with adsorbed boron can significantly reduce the cost of disposal, such as landfill and the like.

Brief Description of Drawings

[Figure 1] Figure 1 shows the IR spectrum of the cellulose derivatives obtained in Examples.
[Figure 2] Figure 2 compares the amount of boron adsorbed by the cellulose derivatives obtained in Examples with that of a previously known boron adsorbent.

Description of Embodiments

[Cellulose derivative]

The cellulose derivative of the present disclosure (hereinafter, sometimes referred to as "cellulose derivative (I)") has a repeating unit represented by the following formula (I-1).

[Formula 7]

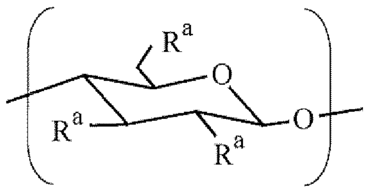

(I-1)

[In the formula, $R^a$ is the same as or different from each other, and is a hydroxyl group or a group represented by the following formula (a). Note that at least one of all $R^a$ contained in the cellulose derivative is the group represented by the following formula (a).]

[Formula 8]

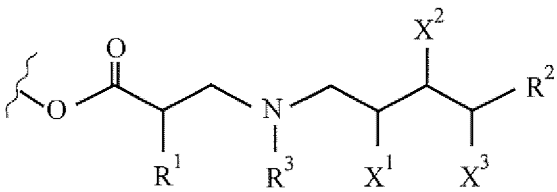

(a)

(In the formula, $R^1$ represents a hydrogen atom or a methyl group. $R^2$ represents a hydrogen atom or a hydrocarbon group optionally having a hydroxyl group. $R^3$ represents a hydrogen atom or a hydrocarbon group. $X^1$ to $X^3$ are the same as or different from each other, and each represent a group that forms a complex with a hard acid in the HSAB theory.)
$R^1$ is preferably a hydrogen atom.
The hydrocarbon group in $R^2$ include an aliphatic hydrocarbon group, an alicyclic hydrocarbon group, an aromatic hydrocarbon group, and a group in which they are bonded.
The aliphatic hydrocarbon group is preferably an aliphatic hydrocarbon group having 1 to 20 carbon atoms, and examples thereof include an alkyl group having 1 to 20 (preferably 1 to 10, particularly preferably 1 to 3) carbon atoms such as a methyl group, an ethyl group, a propyl group, an isopropyl group, a butyl group, an isobutyl group, a s-butyl group, a t-butyl group, a pentyl group, a hexyl group, a decyl group, a dodecyl group, and the like; an alkenyl group having 2 to 20 (preferably 2 to 10, particularly preferably 2 to 3) carbon atoms such as a vinyl group, an allyl group, a 1-butenyl group, and the like; an alkynyl group having 2 to 20 (preferably 2 to 10, particularly preferably 2 to 3) carbon atoms such as an ethynyl group, a propynyl group, and the like; and the like.

The alicyclic hydrocarbon group is preferably a $C_{3-20}$ alicyclic hydrocarbon group, and examples thereof include a 3- to 20-membered (preferably 3- to 15-membered, particularly preferably 5- to 8-membered) cycloalkyl group such as a cyclopropyl group, a cyclobutyl group, a cyclopentyl group, a cyclohexyl group, a cyclooctyl group, and the like; and the like.

The aromatic hydrocarbon group is preferably a $C_{6-14}$ (in particular, $C_{6-10}$) aromatic hydrocarbon group, and examples thereof include a phenyl group, a naphthyl group, and the like.

Above all, the hydrocarbon group in $R^2$ is preferably an aliphatic hydrocarbon group, particularly preferably an alkyl group, and especially preferably an alkyl group having 1 to 5 carbon atoms.

$R^2$ is preferably a hydrocarbon group having a hydroxyl group, more preferably an aliphatic hydrocarbon group having a hydroxyl group, particularly preferably an alkyl group having a hydroxyl group, and especially preferably an alkyl group having 1 to 5 carbon atoms and having a hydroxyl group.

Examples of the hydrocarbon group in $R^3$ include the same examples as the hydrocarbon group in $R^2$. The hydrocarbon group in $R^3$ is preferably an aliphatic hydrocarbon group, particularly preferably an alkyl group, and especially preferably an alkyl group having 1 to 5 carbon atoms.

The cellulose derivative (I) having $X^1$ to $X^3$ is a hard base in the HSAB theory. Substituents described as $X^1$ to$X^3$ in the cellulose derivative (I) forms a complex with a hard acid in the HSAB theory.

$X^1$ to $X^3$ are each a group that forms a complex with a hard acid in the HSAB theory, and examples thereof include a group containing an oxygen atom such as - OR, -OH, and the like, and a group containing a nitrogen atom such as $-NH_2$, -NHR, - $NR_2$, and the like. R represents an alkyl group having 1 to 5 carbon atoms. $X^1$ to $X^3$ are each preferably a hydroxyl group or an amino group, and particularly preferably a hydroxyl group.

Accordingly, the group represented by the formula (a) is preferably a group represented by the following formula (a-1). In the following formula, $R^1$ to $R^3$ are the same as described above.

[Formula 9]

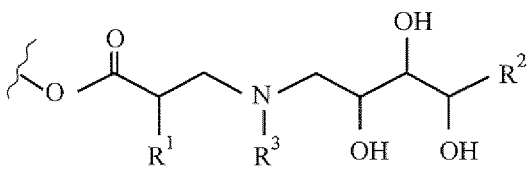

(a-1)

The group represented by the formula (a) is particularly preferably a group represented by the following formula (a-2). In the following formula, $R^1$ and $R^3$ are the same as described above.

[Formula 10]

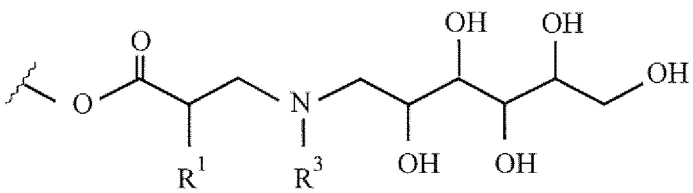

(a-2)

The total average degree of substitution (the total average DS) with the group represented by the formula (a) [preferably the group represented by the formula (a-1), more preferably the group represented by the formula (a-2)] (the average DS of substitution of the hydrogen atoms of the hydroxyl groups at the positions 2, 3 and 6 of the glucose unit constituting the cellulose by the above group) is, for example, 0.1 to 3.0, preferably 1.0 to 3.0, and particularly preferably 2.0 to 3.0. When the cellulose derivative (I) has the above group in the above range, it can exhibit excellent boron adsorption power.

The amount of the group represented by the formula (a) [preferably the group represented by the formula (a-1), more preferably the group represented by the formula (a-2)] introduced into the cellulose derivative (I) is, for example, 1.5 mol/kg or more, preferably 2.0 mol/kg or more, particularly preferably 2.5 mol/kg or more, and most preferably 3.0 mol/kg or more. Note that the upper limit value of the amount introduced is, for example, 3.33 mol/kg.

In addition, in the cellulose derivative (I), one cellulose derivative (I) and another cellulose derivative (I) may be bonded to each other via a group represented by the following formula (c-1) and/or a group represented by the following formula (c-2). That is, a crosslinked structures shown below may be formed.

[Formula 11]

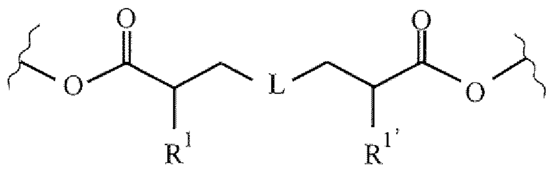

(c-1)

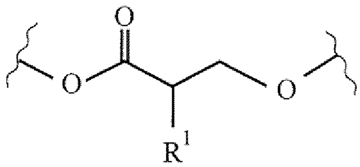

(c-2)

(In the formula, $R^1$ and $R^{1'}$ are the same as or different from each other, and each represent a hydrogen atom or a methyl group. L represents a single bond or an oxygen atom.)

Accordingly, the cellulose derivative (I) may have, along with the repeating unit represented by the formula (I-1), a repeating unit represented by the following formula (I-2) and/or a repeating unit represented by the following formula (I-3). In the case of the cellulose derivative (I) having a repeating unit represented by the following formula (I-2) and/or a repeating unit represented by the following formula (I-3), it is difficult to dissolve in water. Therefore, boron dissolved in an aqueous solution can be conveniently and efficiently recovered by solid phase extraction. Note that, in the following formulas, $R^a$, $R^1$, $R^{1'}$, and L are the same as described above.

[Formula 12]

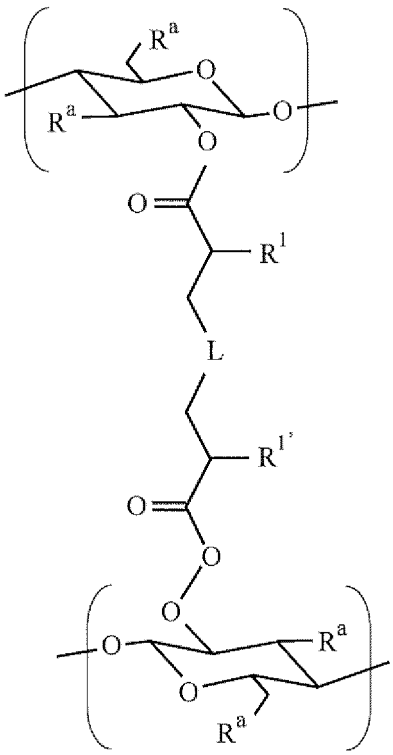

(I-2)

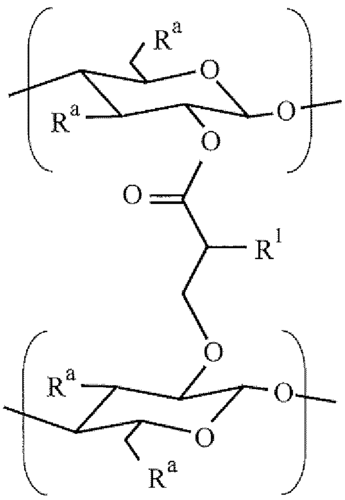

(I-3)

Although the shape of the cellulose derivative (I) is not particularly restricted as long as it does not impair the effects of the present disclosure, it is preferably in the form of gel, powder, pellet, thread, or non-woven fabric in that it can be easily recovered from an aqueous solution after boron in the aqueous solution has been adsorbed.

The cellulose derivative (I) has a group represented by the formula (a), and that group forms a complex with a hard acid in the HSAB theory. Therefore, by using the cellulose derivative (I), it is possible to capture a metalloid (for example, boron) that falls under hard acids in the HSAB theory.

The adsorption capacity of the cellulose derivative (I) for a metalloid (for example, boron) that falls under hard acids in the HSAB theory is, for example, 0.1 mol/kg or more, preferably 0.5 mol/kg or more, more preferably 1 mol/kg or more, still more preferably 1.5 mol/kg or more, particularly preferably 2.0 mol/kg or more, and most preferably 3.0 mol/kg or more.

Note that the adsorption capacity for a metalloid or the like by the cellulose derivative (I) is the amount adsorbed when 10 mg of the cellulose derivative (I) is immersed in an aqueous solution (pH 8) in which the concentration of the metalloid or the like is 200 μmol/L at 25°C and stirred at 200 rpm for 1 hour, and is calculated according to the expression described in Examples.

Since the cellulose derivative (I) has the above characteristics, it can be suitably used as an adsorbent for a metalloid (for example, boron) that falls under hard acids in the HSAB theory.

[Method for producing cellulose derivative (I)]

The cellulose derivative (I) can be produced through, for example, the following steps [1] and [2].

[1] Reacting a cellulose with a compound represented by the following formula (2)

[Formula 13]

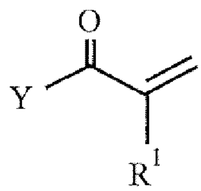

(2)

(In the formula, $R^1$ represents a hydrogen atom or a methyl group. Y represents a hydroxyl group or a halogen atom.) to produce a cellulose derivative having a repeating unit represented by the following formula (II).

[Formula 14]

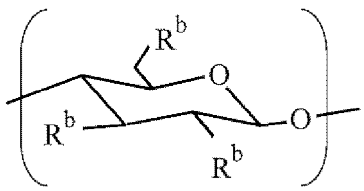

(II)

[$R^b$ in the formula is the same as or different from each other, and is a hydroxyl group or a group represented by the following formula (b).

[Formula 15]

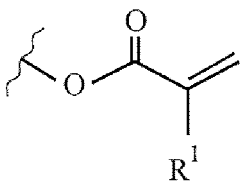

(b)

(In the formula, $R^1$ is the same as described above.)
Note that at least one of all $R^b$ contained in the cellulose derivative is the group represented by the formula (b).]
[2] Reacting the cellulose derivative having the repeating unit represented by the formula (II) with a compound represented by the following formula (3).

[Formula 16]

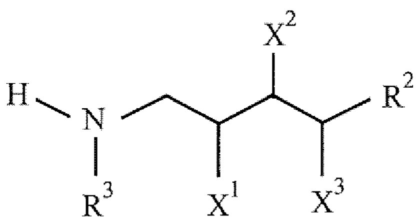

(3)

(In the formula, $R^2$ represents a hydrogen atom or a hydrocarbon group optionally having a hydroxyl group, and $R^3$

represents a hydrogen atom or a hydrocarbon group. $X^1$ to $X^3$ are the same as or different from each other, and each represent a group that forms a complex with a hard acid in the HSAB theory.)

In the formulas, $R^1$ to $R^3$ and $X^1$ to $X^3$ are the same as described above.

The step [1] is a step of reacting a hydroxyl group of a cellulose with a compound represented by the formula (2) (hereinafter, sometimes referred to as "compound (2)") to produce a cellulose derivative having a repeating unit represented by the formula (II) (hereinafter, sometimes referred to as "cellulose derivative (II)").

As the cellulose, for example, cellulose derived from wood pulp (softwood pulp, hardwood pulp) and cotton linter pulp, crystalline cellulose, and the like can be suitably used. They can be used alone as one type, or in combination of two or more types. Note that the pulp may also contain other components such as hemicellulose and the like. As the cellulose, it is preferable to use finely pulverized cellulose (for example, powdered cellulose) by, for example, performing a crushing treatment and the like.

The amount of the compound (2) used is, for example, 1 part by weight or more, preferably 2 to 6 parts by weight, per (based on) 1 part by weight of the cellulose.

In the case of using a compound in which Y in the formula is a hydroxyl group as the compound (2), the reaction of the step [1] is preferably carried out in the presence of a condensing agent. Examples of the condensing agent include 1-ethyl-3-(3-dimethylaminopropyl) carbodiimide hydrochloride (EDC-HCl), N,N'-dicyclohexylcarbodiimide, N,N'-diisopropylcarbodiimide, and the like. They can be used alone as one type, or in combination of two or more types.

The amount of the condensing agent used is, for example, 1 to 10 moles per 1 mole of the compound (2).

In addition, the reaction using the condensing agent is preferably carried out in the presence of a catalyst. Examples of the catalyst include triethylamine, pyridine, N,N-dimethyl-4-aminopyridine (DMAP), and the like. They can be used alone as one type, or in combination of two or more types.

The amount of the catalyst used is, for example, 0.01 to 1.0 moles per 1 mole of the compound (2).

Note that, in the case of using a compound in which Y in the formula is a halogen atom as the compound (2), no condensing agent is particularly necessary.

In the case of using a compound in which Y in the formula is a halogen atom as the compound (2), the reaction of the step [1] is preferably carried out in the presence of a base. The base includes an organic base and an inorganic base.

Examples of the organic base include an aliphatic amine (including, for example, a secondary aliphatic amine such as diisopropylamine and the like, and a tertiary aliphatic amine such as triethylamine, tri-n-propylamine, tri-n-butylamine, tri-s-butylamine, tri-t-butylamine, diisopropylethylamine, dimethylcyclohexylamine, dicyclohexylethylamine, tribenzylamine, benzyldimethylamine, and the like); an aromatic amine (for example, N,N-dimethylaniline, N,N-diethylaniline, diaminodiphenylmethane, methylaniline, and the like); a cyclic amine (for example, 1,5-diazabicyclo[4.3.0]-5-nonene, 1,8-diazabicyclo[5.4.0]-7-undecene, 1,4-diazabicyclo[2.2.2]octane, N-methylpiperidine, 1,4-dimethylpiperazine, N-methylpyrrolidine, N-methylmorpholine, 1-methyl-2,2,6,6-tetramethylpiperidine, pyridine, 2,6-dimethylpyridine, 2,4,6-trimethylpyridine, 4-dimethylaminopyridine (DMAP), 2,6-di-t-butylpyridine, and the like); and the like.

Examples of the inorganic base include an alkali metal alkoxide such as sodium methoxide, sodium ethoxide, potassium t-butoxide, and the like; an alkali metal carbonate such as sodium hydrogen carbonate, sodium carbonate, potassium carbonate, rubidium carbonate, cesium carbonate, and the like; an alkali metal phosphate such as potassium phosphate and the like; an alkali metal hydroxide such as lithium hydroxide, sodium hydroxide, potassium hydroxide, and the like; and the like.

As the base, an organic base is preferable and a tertiary amine is particularly preferable in that it is excellent in the reaction promoting effect between the cellulose and the compound (2), and the cellulose derivative (I) having, along with the repeating unit represented by the formula (I-1), the repeating unit represented by the formula (I-2) and/or the repeating unit represented by the formula (I-3) is obtained.

The amount of the base used is, for example, 0.01 to 1.5 moles per 1 mole of the compound (2).

The reaction of the step [1] is preferably carried out in the presence of a solvent. Examples of the solvent include an aliphatic hydrocarbon such as hexane, heptane, octane, and the like; an alicyclic hydrocarbon such as cyclohexane and the like; an aromatic hydrocarbon such as benzene, toluene, xylene, ethylbenzene, and the like; a halogenated hydrocarbon such as chloroform, dichloromethane, 1,2-dichloroethane, and the like; an ether such as diethyl ether, dimethoxyethane, tetrahydrofuran, dioxane, and the like; a ketone such as acetone, methyl ethyl ketone, methyl isobutyl ketone, and the like; an ester such as methyl acetate, ethyl acetate, isopropyl acetate, butyl acetate, and the like; an amide such as N,N-dimethylformamide, N,N-dimethylacetamide, N-methylpyrrolidone, and the like; a nitrile such as acetonitrile, propionitrile, benzonitrile, and the like; an alcohol such as methanol, ethanol, isopropyl alcohol, butanol, and the like; dimethyl sulfoxide; and the like. They can be used alone as one type, or in combination of two or more types.

As the solvent, an amide such as N,N-dimethylacetamide and the like is preferable, and it is particularly preferable to use one in which a lithium salt such as lithium chloride and the like is mixed with the solvent in that the solubility of the cellulose is excellent. The lithium salt concentration in the solvent can be adjusted as appropriate to the extent that it does not impair the effect of dissolving the cellulose, and is, for example, 1 to 30% by weight.

The amount of the solvent used is, for example, 10 to 500 mL, preferably 20 to 100 mL, per 1 g of the cellulose. If the amount of the solvent used is greater than the above range, the concentration of the reaction components tends to be lower and the reaction rate tends to decline.

The total average DS (the total average degree of substitution) with the group represented by the formula (b) (the average DS of the hydrogen atoms of the hydroxyl groups at the positions 2, 3 and 6 of the glucose unit constituting the cellulose by the above group) in the cellulose derivative (II) obtained through the step [1] is, for example, 0.1 to 3.0, preferably 1.0 to 3.0, and particularly preferably 2.0 to 3.0.

The step [2] is a step of reacting the cellulose derivative (II) produced through the step [1] with a compound represented by the formula (3) (hereinafter, sometimes referred to as "compound (3)"). Through the step [2], the cellulose derivative (I) is obtained.

As the compound (3), for example, D-glucamine, N-methylglucamine, N-ethylglucamine, and the like are preferable.

The amount of the compound (3) used is, for example, 1.5 parts by weight or more, preferably 1.5 to 5.5 parts by weight, and particularly preferably 2.5 to 5.5 parts by weight, per 1 part by weight of the cellulose derivative (II).

The reaction of the step [2] is preferably carried out in the presence of a solvent. Examples of the solvent include an aromatic hydrocarbon such as toluene, xylene, ethylbenzene, and the like; an alcohol such as methanol, ethanol, 2-propanol, isopropyl alcohol, butanol, and the like; and N-methylpyrrolidone, dimethyl sulfoxide, N,N-dimethylformamide, and the like. They can be used alone as one type, or in combination of two or more types.

The amount of the solvent used is, for example, 10 to 500 mL, preferably 20 to 100 mL, per 1 g of the cellulose derivative (II). When the amount of the solvent used is greater than the above range, the concentration of the reaction components tends to be lower and the reaction rate tends to decline.

The reaction temperature in the step [2] is, for example, 20 to 80°C. The reaction time is, for example, 1 to 72 hours. After the reaction is completed, the resulting reaction product can be separated and purified by, for example, a separation means such as filtration, concentration, distillation, extraction, crystallization, adsorption, recrystallization, column chromatography, or the like, or a separation means in which they are combined.

[Boron adsorbent]

The boron adsorbent of the present disclosure comprises the cellulose derivative (I).

Although the boron adsorbent may contain other components in addition to the cellulose derivative (I), the proportion of the cellulose derivative (I) is, for example, 50% by weight or more, preferably 60% by weight or more, particularly preferably 70% by weight or more, most preferably 80% by weight or more, and especially preferably 90% by weight or more, based on the entire amount of the boron adsorbent. If the proportion of the cellulose derivative (I) is smaller than the above range, it tends to be difficult to efficiently and selectively adsorb boron.

Moreover, the boron adsorbent may also contain other cellulose derivatives in addition to the cellulose derivative (I), but the proportion of the cellulose derivative (I) is, for example, 60% by weight or more, preferably 70% by weight or more, particularly preferably 80% by weight or more, most preferably 90% by weight or more, and especially preferably 95% by weight or more, based on the entire amount of the cellulose derivatives contained in the boron adsorbent. When the proportion of the cellulose derivative (I) is smaller than the above range, it tends to be difficult to efficiently and selectively adsorb boron.

There is no particular restriction on the formulation of the boron adsorbent to the extent that it is effective, and examples thereof include powder, pellet, thread, non-woven fabric, and the like.

The boron adsorbent has the characteristics of the cellulose derivative (I). That is, it has high adsorption power for boron, which falls under hard acids in the HSAB theory. Therefore, it is suitable for applications in which boron is selectively recovered from industrial wastewater, mine wastewater, hot spring water and the like, seawater, and the like.

[Method for recovering boron]

In the method for recovering boron of the present disclosure, boron dissolved in an aqueous solution (or boron contained and present in an aqueous solution) is adsorbed by the cellulose derivative (I) and recovered.

In an aqueous solution, boron strongly interacts with hydroxyl groups, which are hard bases, and is present as boric acid or tetrahydroxyborate ion. Then, the cellulose derivative (I) adsorbs and recovers boron ion in the form of a chelate complex between the group represented by the formula (a) and boric acid or tetrahydroxyborate ion contained in the aqueous solution, by substitution of hydroxyl groups thereof.

The method for allowing boron dissolved in an aqueous solution to be adsorbed by the cellulose derivative (I) is not particularly restricted, and examples thereof include a method in which the cellulose derivative (I) is packed in a column or the like and an aqueous solution in which boron is dissolved is poured into it, a method in which the cellulose derivative (I) is added to an aqueous solution in which boron is dissolved and the aqueous solution is stirred, and other

methods.

In the method for recovering boron, it is preferable to adjust the pH of the cellulose derivative (I) to, for example, 6 to 12 (in particular 7 to 10, especially 7 to 9) in that adsorption power for metals can be even further improved and boron can be recovered even more efficiently. Note that the pH adjustment of the cellulose derivative can be carried out using a well-known and customary pH adjuster (an acid such as nitric acid and the like, or an alkali such as sodium hydroxide and the like).

In addition, after boron is adsorbed by the cellulose derivative (I), the volume can be remarkably reduced by burning the cellulose derivative (I) with adsorbed boron, thereby reducing the cost of disposal.

Each of the above configurations and combinations thereof, and the like in the present disclosure are only examples, and additions, omissions, substitutions, and modifications to the configuration can be made as appropriate within the scope that does not depart from the gist of the present disclosure. Also, the present disclosure is not limited by embodiments, but only by description of the scope of claims.

## Examples

Hereinafter, the present disclosure will be described more specifically by means of Examples, but the present disclosure is not limited by these Examples.

### Example 1 (Preparation of cellulose derivative (OH139))

(Step I)

In a two-necked eggplant flask, cellulose (polymer having a repeating unit represented by the following formula (1-1), 0.421 g, 2.60 mmol) was placed and vacuum dried at 90°C for 2 hours. Under a nitrogen atmosphere, N,N-dimethylacetamide (13 mL) was added and the mixture was stirred for 21 hours. The reaction vessel was cooled to 0°C in an ice bath, lithium chloride (0.82 g) was added, and the cellulose was dissolved by stirring while raising the temperature to room temperature (25°C). The reaction vessel was cooled again to 0°C in an ice bath, acryloyl chloride (1.18 g, 13.0 mmol) and diisopropylamine (0.79 g, 7.79 mmol) were added, and the mixture was stirred for 18 hours while raising the temperature to room temperature. The reaction solution was poured into ethanol, and the solid obtained by reprecipitation was recovered by suction filtration. The obtained solid was vacuum dried to obtain cellulose acrylate (polymer having a repeating unit represented by the following formula (II-1), 633 mg, yield: about 80%) as a light orange solid.

From the results of $^{1}$H-NMR measurement, the total average degree of substitution (DS) with the acryloyl group was calculated to be 2.3 to 2.6.

[Formula 17]

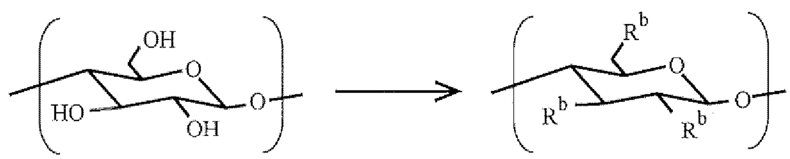

(1-1)

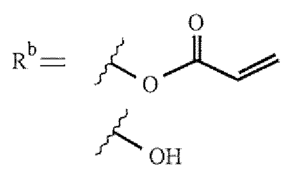

(II-1)

(Cellulose acrylate)

$^1$H-NMR (500 MHz, DMSO-d6, r.t.): δ5.5-6.5 (acryloyl groups), 1.5-5.3 (cellulose, overlapped with residual $H_2O$ and DMSO)

(Step II)

Under a nitrogen atmosphere, the cellulose acrylate (polymer having a repeating unit represented by the following formula (II-1), 0.300 g, 1.01 mmol) was added to a two-necked eggplant flask, and dimethyl sulfoxide (10 mL) was added to dissolve it. N-methylglucamine (1.18 g, 6.06 mmol) was added and the mixture was stirred at room temperature for 2 hours. The reaction solution was poured into ethanol, and the solid obtained by reprecipitation was recovered by centrifugation and washed with ethanol. The obtained solid was vacuum dried to obtain a cellulose derivative (OH139) (polymer having a repeating unit represented by the following formula (I-1), 547 mg, yield: about 70%) as a colorless powder.

From the results of $^1$H-NMR measurement, the total average degree of substitution (DS) with the N-methylglucamine group was calculated to be 2.3 to 2.6, and the amount of the N-methylglucamine group introduced was calculated to be 3.1 to 3.2 mol/kg. The IR spectrum of the cellulose derivative (OH139) is shown in Figure 1.

[Formula 18]

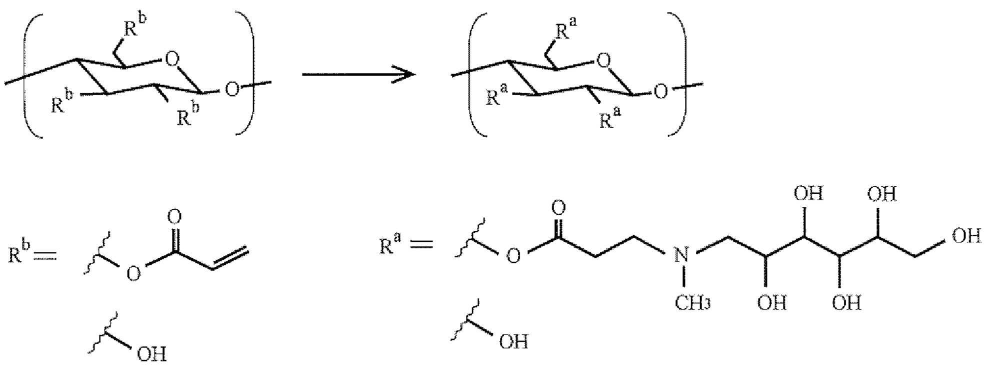

(II-1) (I-1)

(Cellulose derivative (OH139))

$^1$H-NMR (500 MHz, DMSO-d6, r.t.): δ4.04-5.00 (br), 3.65-3.75 (br), 3.54-3.64 (br), 3.46-3.53 (br), 3.19-3.45 (br), 2.59-2.81 (br), 2.50 (brs), 2.29-2.40 (br), 2.13-2.29 (br)

Examples 2 to 4 (Preparation of cellulose derivatives)

Cellulose derivatives were obtained in the same manner as in Example 1, except that the reaction conditions in the step I were changed as described in the table below. The IR spectrum of the cellulose derivative (OH145) obtained in Example 2 and the cellulose derivative (OH149) obtained in Example 3 are shown in Figure 1.

[Table 1]

Table 1

| | Step I | | | | Step II | | | |
|---|---|---|---|---|---|---|---|---|
| | Acrylic compound | Base, condensing agent | Properties of reaction solution | Total average degree of substitution with acryloyl group in product | Cellulose derivative No. | Total average degree of substitution with glucamine group in product | Amount of glucamine group introduced in product (mol/kg) | Solubility in water |
| Example 1 | Acryloyl chloride | $(i\text{-}Pr)_2NH$ | Solution | 2.3 to 2.6 | OH139 | 2.3 to 2.6 | 3.1-3.2 | Soluble |
| Example 2 | Acryloyl chloride | $PhNEt_2$ | Gel | 2.3 to 2.6 | OH145 | 2.3 to 2.6 | 3.1-3.2 | Insoluble |
| Example 3 | Acryloyl chloride | $(i\text{-}Pr)_2NEt$ | Gel | 2.3 to 2.6 | OH149 | 2.3 to 2.6 | 3.1-3.2 | Insoluble |
| Example 4 | Acrylic acid | EDC-HCl, DMAP | Solution | <1 | OH129 | <1 | <2.4 | Soluble |

In Examples 2 and 3, the reaction solution after the completion of the step [1] was in the form of gel. This suggests that hydroxyl groups of the cellulose are substituted by acryloyl groups and that the cellulose is bonded to each other via the crosslinked structure derived from the acrylic compound.

[Evaluation of adsorption capacity for boron]

For the cellulose derivatives obtained in Examples 2 and 3, and Diaion CRB05 (manufactured by Mitsubishi Chemical Corporation) as Comparative Example, the adsorption capacity for boron was evaluated by the following method (batch method). Note that CRB05 is a polymer in which methylglucamine groups are bonded to a polystyrene crosslinked with divinylbenzene, and the content of the above groups is 0.6 to 1.0 mol/kg.

To a 100 mL centrifuge tube, 10 mL of a 200 μM boron aqueous solution (pH 8) and 10 mg of the cellulose derivative classified to 212 to 600 μm were added, and stirred at 25°C and 200 rpm for 1 hour.

Filtration was performed using a membrane filter (nitrocellulose, pore size: 0.45 μm), and the boron ion concentration (Ce: mol/L) in the filtrate was quantified with an ICP emission spectrometer (iCAP 6300 manufactured by Thermo Fischer Scientific). The initial concentration of boron ion in the solution was defined as $C_0$ (mol/L), the volume of the solution added as Vo (L), and the weight of the cellulose derivative used as m (kg), and the adsorption capacity (mol/kg) was calculated according to the following expression.

$$\text{Adsorption capacity} = (C_0 - Ce) \times V_0/m$$

The results are shown in Figure 2. It can be seen from Figure 2 that the cellulose derivatives of the present disclosure can adsorb and recover boron with superior efficiency compared to the previously known boron adsorbent.

To summarize the above, the configuration of the present disclosure and its variations are appended below.

[1] A cellulose derivative having a repeating unit represented by the following formula (I-1).
[2] The cellulose derivative according to [1], wherein a total average degree of substitution with the group represented by the formula (a) is 0.1 to 3.0.
[3] The cellulose derivative according to [1] or [2], wherein the group represented by the formula (a) is introduced in an amount of 1.5 mol/kg or more.
[4] The cellulose derivative according to any one of [1] to [3], further having a repeating unit of at least one selected from the formula (I-2) and the formula (I-3).
[5] The cellulose derivative according to any one of [1] to [4], which is in the form of powder or pellet.
[6] The cellulose derivative according to any one of [1] to [5], having an adsorption capacity for a metalloid that corresponds to a hard acid in the HSAB theory of 0.1 mol/kg or more.
[7] A boron adsorbent comprising the cellulose derivative according to any one of [1] to [6].
[8] The boron adsorbent according to [7], having an adsorption capacity for boron of 0.1 mol/kg or more.
[9] The boron adsorbent according to [7] or [8], wherein a content of the cellulose derivative according to any one of [1] to [6] in the boron adsorbent is 50% by weight or more.
[10] A method for recovering boron, wherein boron dissolved in an aqueous solution is adsorbed by the cellulose derivative according to any one of [1] to [6] and recovered.
[11] A method for producing a cellulose derivative, wherein the cellulose derivative according to any one of [1] to [6] is produced through the following steps 1 and 2.

Step 1: Reacting a cellulose with a compound represented by the formula (2) to produce a cellulose derivative having a repeating unit represented by the formula (II).

Step 2: Reacting the cellulose derivative having the repeating unit represented by the formula (II) with a compound represented by the formula (3).

Industrial Applicability

The cellulose derivative of the present disclosure can be suitably used as a boron adsorbent. In the case of using the cellulose derivative as a boron adsorbent, the boron adsorbent does not cause exhaust problems when burned, and the volume can be reduced by burning it after adsorbing boron, thereby significantly reducing the cost of disposal, such as landfill and the like.

## Claims

1. A cellulose derivative having a repeating unit represented by the following formula (I-1):

[Formula 1]

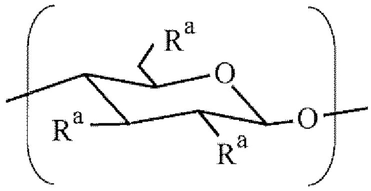

(I-1)

wherein $R^a$ is the same as or different from each other, and is a hydroxyl group or a group represented by the following formula (a), provided that at least one of all $R^a$ contained in the cellulose derivative is the group represented by the following formula (a):

[Formula 2]

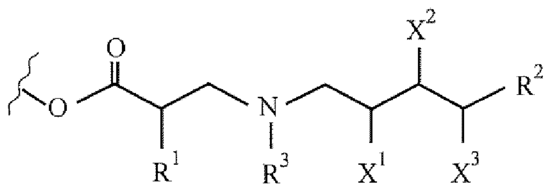

(a)

wherein $R^1$ represents a hydrogen atom or a methyl group; $R^2$ represents a hydrogen atom or a hydrocarbon group optionally having a hydroxyl group; $R^3$ represents a hydrogen atom or a hydrocarbon group; and $X^1$ to $X^3$ are the same as or different from each other, and each represent a group that forms a complex with a hard acid in a HSAB theory.

2. The cellulose derivative according to claim 1, wherein a total average degree of substitution with the group represented by the formula (a) is 0.1 to 3.0.

3. The cellulose derivative according to claim 1 or 2, wherein the group represented by the formula (a) is introduced in an amount of 1.5 mol/kg or more.

4. A boron adsorbent comprising the cellulose derivative according to any one of claims 1 to 3.

5. A method for recovering boron, wherein boron dissolved in an aqueous solution is adsorbed by the cellulose derivative according to any one of claims 1 to 3 and recovered.

6. A method for producing a cellulose derivative, wherein the cellulose derivative according to any one of claims 1 to 3 is produced through the following steps:

[1] reacting a cellulose with a compound represented by the following formula (2):

[Formula 3]

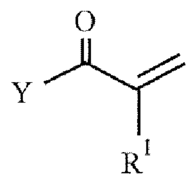

(2)

wherein $R^1$ represents a hydrogen atom or a methyl group; and Y represents a hydroxyl group or a halogen atom,
to produce a cellulose derivative having a repeating unit represented by the following formula (II):

[Formula 4]

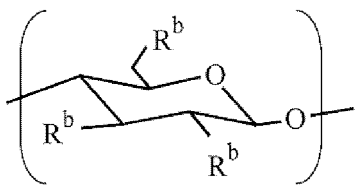

(II)

wherein $R^b$ is the same as or different from each other, and is a hydroxyl group or a group represented by the following formula (b):

[Formula 5]

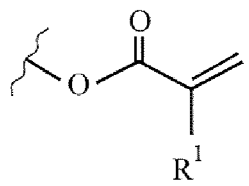

(b)

wherein $R^1$ is the same as described above,
provided that at least one of all $R^b$ contained in the cellulose derivative is the group represented by the formula (b);

[2] reacting the cellulose derivative having the repeating unit represented by the formula (II) with a compound represented by the following formula (3):

[Formula 6]

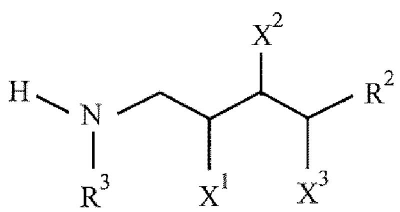

(3)

wherein $R^2$ represents a hydrogen atom or a hydrocarbon group optionally having a hydroxyl group; $R^3$ represents a hydrogen atom or a hydrocarbon group; and $X^1$ to $X^3$ are the same as or different from each other, and each represent a group that forms a complex with a hard acid in a HSAB theory.

FIG. 1

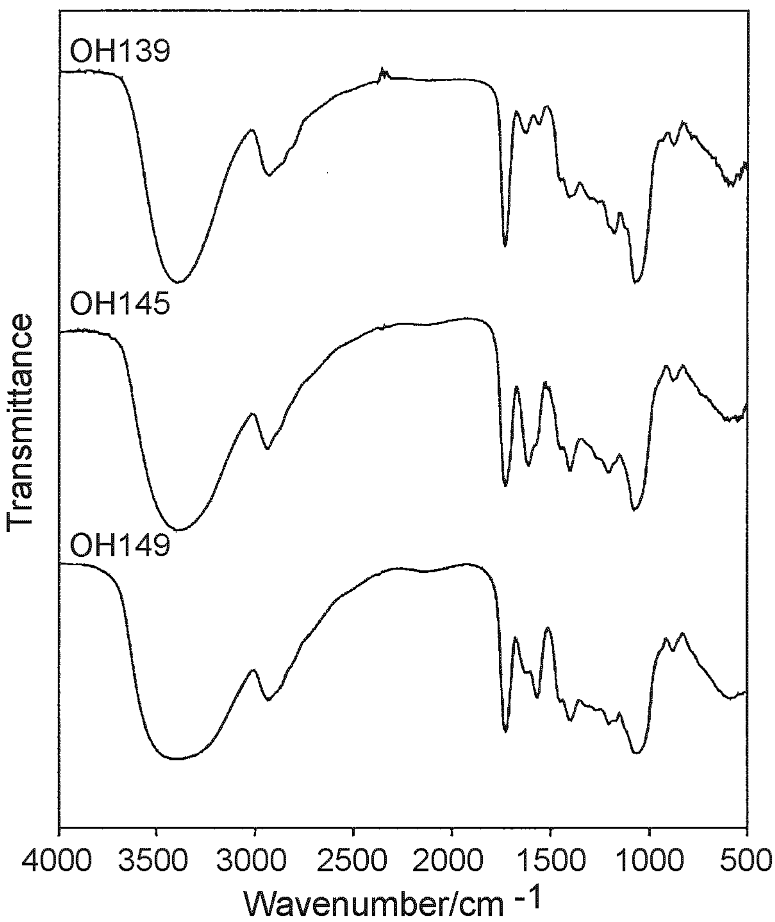
OH139
OH145
OH149
Transmittance
4000 3500 3000 2500 2000 1500 1000 500
Wavenumber/cm -1

FIG. 2

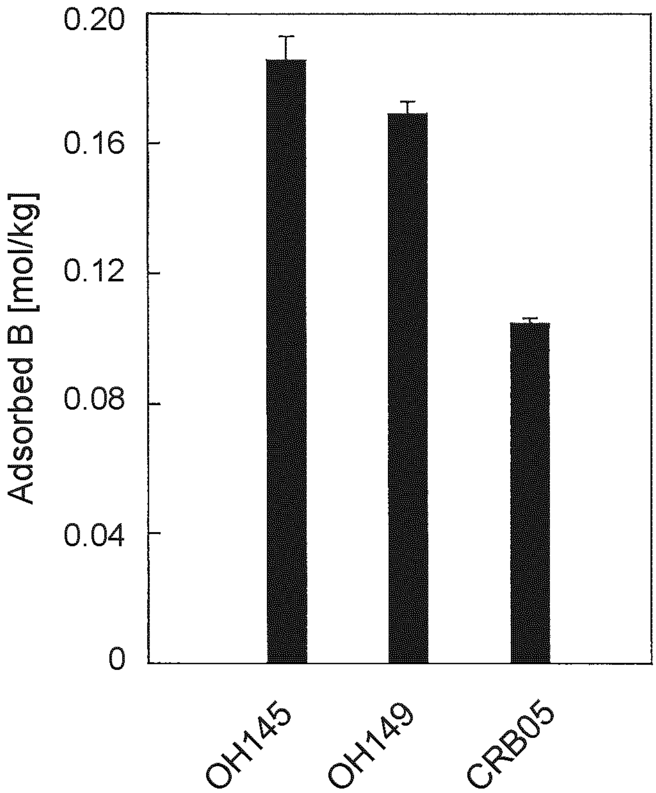

**INTERNATIONAL SEARCH REPORT**

International application No. **PCT/JP2021/029911**

**A. CLASSIFICATION OF SUBJECT MATTER**

***C08B 3/14***(2006.01)i; ***C02F 1/28***(2006.01)i; ***C08F 8/30***(2006.01)i
FI: C08B3/14; C02F1/28 B; C08F8/30

According to International Patent Classification (IPC) or to both national classification and IPC

**B. FIELDS SEARCHED**

Minimum documentation searched (classification system followed by classification symbols)

C08B3/14; C02F1/28; C08F8/30

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y | Analytical Chimica Acta. 2004, 511, 261-265<br>p. 262, scheme 1 | 1–6 |
| Y | Journal of Environmental Chemical Engineering. 2019, (2019)103281, 1-11<br>p. 4, scheme 2 | 1–6 |
| Y | Langmuir. 2011, 27, 6018-6025<br>p. 6019, fig. 1 | 1–6 |
| Y | Bulletin of the Society of Sea Water Science, Japan. 2016, 70, 255-260<br>p. 255, fig. 1 | 1–6 |
| Y | 化学装置, 2012, 54(2), 53-58<br>p. 56, fig. 4, non-official translation (chemical equipment) | 1–6 |
| Y | JP 2009-013204 A (NHV CORPORATION) 22 January 2009 (2009-01-22)<br>p. 17, example 1 | 1–6 |
| Y | CN 108360080 A (TIANJIN POLYTECHNIC UNIVERSITY) 03 August 2018 (2018-08-03)<br>p. 7/15, example 3 | 1–6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 October 2021** | **19 October 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2021/029911**

**C. DOCUMENTS CONSIDERED TO BE RELEVANT**

| Category* | Citation of document, with indication, where appropriate, of the relevant passages | Relevant to claim No. |
|---|---|---|
| Y | JP 2012-163750 A (KONICA MINOLTA BUSINESS TECHNOLOGIES INC) 30 August 2012 (2012-08-30)<br>p. 19, paragraph [0081], p. 27, paragraph [0139] | 1–6 |
| Y | WO 2010/069329 A1 (CARLSBERG A/S) 24 June 2010 (2010-06-24)<br>p. 62, example 1 | 1–6 |

Form PCT/ISA/210 (second sheet) (January 2015)

**INTERNATIONAL SEARCH REPORT**
**Information on patent family members**

International application No.
**PCT/JP2021/029911**

| Patent document cited in search report | Publication date (day/month/year) | Patent family member(s) | Publication date (day/month/year) |
|---|---|---|---|
| JP 2009-013204 A | 22 January 2009 | (Family: none) | |
| CN 108360080 A | 03 August 2018 | (Family: none) | |
| JP 2012-163750 A | 30 August 2012 | (Family: none) | |
| WO 2010/069329 A1 | 24 June 2010 | US 2012/0135170 A1<br>EP 2379635 A1<br>CN 102317365 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005239961 A